(19) Europäisches Patentamt
European Patent Office
Office européen des brevets

(11) **EP 3 283 554 B1**

## (12) FASCICULE DE BREVET EUROPEEN

(45) Date de publication et mention
de la délivrance du brevet:
**16.10.2019 Bulletin 2019/42**

(21) Numéro de dépôt: **16731203.2**

(22) Date de dépôt: **14.04.2016**

(51) Int Cl.:
*C08J 3/215* (2006.01)     *B60C 1/00* (2006.01)
*C08J 3/22* (2006.01)      *C08K 3/04* (2006.01)
*C08L 9/08* (2006.01)

(86) Numéro de dépôt international:
**PCT/FR2016/050868**

(87) Numéro de publication internationale:
**WO 2016/166483 (20.10.2016 Gazette 2016/42)**

(54) **MÉTHODE DE PRÉPARATION D'UN MÉLANGE MAÎTRE D'ÉLASTOMÈRE DIENIQUE SYNTHETIQUE ET DE CHARGE CARBONÉE**

HERSTELLUNGSVERFAHREN FÜR EIN MASTERBATCH EINES SYNTHETISCHEN DIENISCHEN ELASTOMEREN UND KOHLENSTOFFHALTIGEN FÜLLSTOFFES

PREPARATION METHOD OF A MASTERBATCH OF SYNTHETIC DIENIC ELASTOMER AND A CARBONACEOUS CHARGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.04.2015 FR 1553314**

(43) Date de publication de la demande:
**21.02.2018 Bulletin 2018/08**

(73) Titulaire: **Compagnie Générale des Etablissements Michelin**
**63000 Clermont-Ferrand (FR)**

(72) Inventeurs:
• **LALLET, François**
**63040 Clermont-Ferrand Cedex 9 (FR)**
• **ELOY, Marie**
**63040 Clermont-Ferrand Cedex 9 (FR)**

(74) Mandataire: **Cohen, Sylvia**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**WO-A1-2013/087685     JP-A- 2006 348 216**

• **FERNANDO MARTÍNEZ-PEDRERO ET AL: "Making an elastomeric composite material via the heteroaggregation of a binary colloidal dispersion", SOFT MATTER, vol. 8, no. 33, 1 janvier 2012 (2012-01-01), page 8752, XP055257448, GB ISSN: 1744-683X, DOI: 10.1039/c2sm25441g cité dans la demande**

**EP 3 283 554 B1**

**Description**

L'invention concerne la préparation d'un mélange-maître d'élastomère diénique synthétique et de charge carbonée.

On entend par « mélange-maître » (couramment désigné par son nom anglais « masterbatch »): un composite à base d'élastomère dans lequel a été introduit une charge et éventuellement d'autres additifs.

Pour obtenir les propriétés de renforcement optimales conférées par une charge dans une bande de roulement de pneumatique et ainsi une haute résistance à l'usure, on sait qu'il convient d'une manière générale que cette charge soit présente dans la matrice élastomérique sous une forme finale qui soit à la fois la plus finement divisée possible et répartie de la façon la plus homogène possible. Or, de telles conditions ne peuvent être réalisées que dans la mesure où cette charge présente une très bonne aptitude, d'une part à s'incorporer dans la matrice lors du mélange avec l'élastomère et à se désagglomérer, se disperser et se distribuer de façon homogène dans cette matrice.

Or, afin d'améliorer la dispersibilité de la charge dans la matrice élastomérique, il est connu de recourir à un mélange d'élastomère et de charge en phase « liquide ». Pour ce faire, il est fait appel à un élastomère sous forme de latex, et à une dispersion aqueuse de la charge, couramment appelée « slurry ».

Dans ce domaine, dès 1955, le problème de la dispersion uniforme des charges, et notamment du noir de carbone au sein du caoutchouc était déjà posé. Ainsi, il est connu du document BE 541816 un procédé de préparation d'un mélange-maître de caoutchouc et de noir de carbone en phase liquide. Ce procédé se fait en continu et utilise des chocs hydrauliques ou une violente agitation mécanique pour réaliser la dispersion du noir de carbone au sein de la matrice élastomérique.

De plus ce procédé s'il fonctionne avec des charges carbonées, telles que les noirs de carbone, qui coagulent spontanément avec le caoutchouc naturel, ne permet pas d'obtenir une coagulation avec des élastomères synthétiques. Il est donc nécessaire d'ajouter un agent dit « de coagulation » permettant de réaliser la prise en masse, donc la coagulation avec des élastomères synthétiques.

On entend par agent de coagulation en phase aqueuse des sels comme le chlorure de sodium, des acides comme le chlorure d'hydrogène ou encore des bases comme l'hydroxyde de sodium.

Plus récemment, le document WO97/36724 divulgue un procédé de préparation d'un mélange-maître et un appareillage spécifique permettant d'améliorer la dispersibilité du noir de carbone dans un latex de caoutchouc naturel. Cette technologie répond à deux objectifs: la réalisation de l'étape de coagulation en absence d'agent coagulant et l'obtention d'un mélange-maître, dont la répartition de la charge est uniforme. Toutefois, cette technologie présente un certain nombre d'inconvénients. L'appareillage mis en oeuvre est très complexe et le procédé décrit s'appuie sur des caractéristiques très précises liées à cet appareillage, tel qu'une géométrie de la zone de coagulation définie ou encore une différence de vitesse de flux définie.

Ainsi, il est recherché un procédé de préparation d'un mélange-maître conduisant à un mélange-maître dont la répartition de la charge est uniforme dans tout le produit, dont le rendement massique et le ratio charge/élastomère sont satisfaisants, ce procédé devant être facile à mettre en oeuvre à partir d'équipements simples, sans nécessiter l'utilisation d'agent de coagulation. Ce procédé est particulièrement intéressant pour du noir de carbone qui coagule spontanément avec du caoutchouc naturel mais pas avec des élastomères synthétiques.

Les demanderesses ont découvert de façon surprenante une méthode d'obtention simple d'un mélange-maître charge carbonée-élastomère synthétique préparé en phase « liquide », ce qui permet d'obtenir une bonne dispersion de la charge dans la matrice, sans utiliser d'agent de coagulation. Une telle méthode permet, de plus, non seulement d'atteindre un très bon rendement de coagulation (supérieur à 80% massique) en respectant le taux de charge préalablement introduit (un écart de 20% par rapport au taux de charge calculé initialement étant considéré comme acceptable).

L'invention porte ainsi sur une méthode de préparation d'un mélange-maître d'élastomère synthétique et de charge carbonée, qui comprend les étapes suivantes:

- préparer une dispersion aqueuse de charge carbonée présentant un potentiel Zêta de signe opposé à celui d'un latex d'élastomère synthétique anionique ou cationique, la différence des potentiels du latex d'élastomère anionique ou cationique et de la dispersion aqueuse de charge carbonée étant telle que sa valeur absolue est supérieure ou égale à 20mV,
- mettre en contact et mélanger le latex de d'élastomère synthétique anionique ou cationique et la dispersion aqueuse de charge carbonée pour obtenir un coagulum.
- récupérer le coagulum,
- sécher le coagulum récupéré pour obtenir le mélange-maître.

Par charge carbonée, on entend au sens de l'invention un objet particulaire ne contenant dans sa masse que des atomes de carbone, « aux impuretés près » étant entendu qu'en surface il peut y avoir d'autres atomes.

Une charge carbonée peut être choisie, sans être exhaustif, parmi les noirs de carbone, les graphites naturels et synthétiques, les fibres de carbone, les graphènes, les fullerènes, les noirs d'acétylène et les nanotubes de carbone.

Selon une caractéristique préférentielle de l'invention, l'élastomère synthétique est un élastomère synthétique diénique.

Préférentiellement, les potentiels Zêta du latex d'élastomère anionique ou cationique et de la dispersion aqueuse de charge carbonée présentent une différence dont la valeur absolue est supérieure ou égale à 30mV.

Selon une autre caractéristique de l'invention, la dispersion aqueuse de charge carbonée contient un agent tensio-actif de signe opposé à celui du latex d'élastomère synthétique.

Avantageusement, le latex d'élastomère synthétique anionique ou cationique contient au moins un tensio-actif respectivement anionique ou cationique.

Selon un mode de réalisation de l'invention, le latex d'élastomère synthétique est obtenu par polymérisation en phase aqueuse.

Selon un autre mode de réalisation de l'invention, le latex d'élastomère synthétique est obtenu par émulsification en phase aqueuse d'un élastomère diénique.

De préférence, le latex d'élastomère synthétique est un latex de copolymère de butadiène et de styrène, SBR, et encore plus préférentiellement le latex d'élastomère synthétique est un SBR préparé en émulsion.

Selon une variante de réalisation de l'invention, la charge carbonée est constituée par du noir de carbone, de préférence la quantité de charge carbonée lors de la mise en contact de deux dispersions aqueuses va de 2 pcmo à 150 pcmo, parties en poids pour cent parties de matière organique.

L'invention a également pour objet un mélange maître d'élastomère diénique synthétique et de charge carbonée obtenu selon la méthode citée ci-dessus, ainsi qu'une composition à base d'au moins un tel mélange-maître. L'invention concerne encore un article fini ou semi-fini comportant une composition telle que citée précédemment, une bande de roulement de pneumatique comportant une telle composition et un pneumatique ou produit semi-fini comportant au moins une telle composition.

## I. MESURES ET TESTS

### I.1 Mesure du potentiel Zêta

Tel qu'utilisé ici, le potentiel Zêta est un terme scientifique désignant le potentiel électrocinétique dans des systèmes colloïdaux. Dans la littérature de la chimie colloïdale, il est généralement désigné en utilisant la lettre grecque Zêta, d'où potentiel $\zeta$.

Le potentiel Zêta est une mesure de l'amplitude de la répulsion ou de l'attraction entre particules. Le potentiel Zêta est un indice de l'amplitude de l'interaction entre particules colloïdales, et les mesures de potentiel Zêta sont utilisées pour avoir accès à la stabilité de systèmes colloïdaux.

La plupart des dispersions colloïdales en milieux aqueux portent une charge de surface. Si des groupes acides sont présents à la surface d'une particule, celle-ci aura tendance à développer une charge de surface négative. Par opposition, si des groupes basiques sont présents à la surface d'une particule, celle-ci aura tendance à développer une charge de surface positive. L'amplitude de la charge de surface dépend de la force acide ou basique des groupes de surface et du pH de la solution. La charge de surface peut être réduite à zéro en supprimant l'ionisation de surface par réduction du pH dans le cas de particules de charge négative ou augmentation du pH dans le cas de particules de charge positive. Des tensio-actifs peuvent être spécifiquement adsorbés sur la surface d'une particule, ce qui conduit, dans le cas de tensio-actifs cationiques, à une surface de charge positive, et dans le cas de tensio-actifs anioniques, à une surface de charge négative. Voir « Zeta Potential an Introduction in 30 Minutes », note technique de la série Zêtasizer Nano, p. 3 (avant septembre 2010). L'apparition d'une charge nette à la surface d'une particule affecte la distribution des ions dans la région interfaciale environnante, ce qui se solde par une concentration accrue de contre-ions, des ions de charge opposée à celle de la particule, près de la surface. Ainsi, il existe une double couche électrique autour de chaque particule. La couche liquide entourant la particule se présente en deux parties: une région interne (couche de Stern) où les ions sont fortement liés et une région externe (couche diffuse) où ils sont moins bien associés. Dans la couche diffuse, il existe une frontière imaginaire à l'intérieur de laquelle les ions et les particules forment une entité stable. Quand une particule colloïdale se déplace (par ex., sous l'effet de l'agitation thermique), les ions à l'intérieur de la frontière se déplacent avec elle. Les ions au-delà de la frontière restent avec le volume de dispersant. Le potentiel à la frontière (surface de cisaillement hydrodynamique) est le potentiel Zêta.

D'un point de vue théorique, le potentiel Zêta est un potentiel électrique dans la double couche (DL) interfaciale à l'emplacement du plan de glissement par rapport à un point dans le volume de fluide loin de l'interface. En d'autres termes, le potentiel Zêta est la différence de potentiel entre le milieu de dispersion et la couche stationnaire de fluide attachée à la particule dispersée.

Le potentiel Zêta est largement utilisé pour la quantification de l'amplitude de la charge électrique au niveau de la double couche. Le potentiel Zêta ne doit pas être confondu avec le potentiel d'électrode ou le potentiel électrochimique (parce que les réactions électrochimiques ne sont généralement pas impliquées dans l'apparition du potentiel Zêta).

En milieu aqueux, le pH de l'échantillon affecte son potentiel Zêta. Par exemple, si un alcali est ajouté à une suspension avec un potentiel Zêta négatif, les particules ont tendance à acquérir une charge plus négative. Si un acide est ajouté en quantité suffisante à la suspension, on atteindra alors un point où la charge sera neutralisée. L'addition d'une quantité supplémentaire d'acide provoquera une accumulation de charge positive.

Le potentiel Zêta n'est pas directement mesurable, mais il peut être calculé en utilisant des modèles théoriques et une mobilité électrophorétique ou une mobilité électrophorétique dynamique déterminée expérimentalement. Les phénomènes électrocinétiques et les phénomènes électroacoustiques constituent les sources habituelles de données pour le calcul du potentiel Zêta. Cependant, aux fins de la présente demande, le potentiel Zêta est calculé en utilisant des phénomènes électrocinétiques, en particulier l'électrophorèse. L'électrophorèse est employée pour estimer le potentiel Zêta de particules, alors que le potentiel/courant d'écoulement est utilisé pour des corps poreux et des surfaces plates.

L'électrophorèse est le mouvement d'une particule chargée par rapport au liquide où elle est en suspension sous l'influence d'un champ électrique appliqué. Quand un champ électrique est appliqué à travers un électrolyte, les particules chargées en suspension dans l'électrolyte sont attirées vers l'électrode de charge opposée. Les forces visqueuses agissant sur les particules ont tendance à s'opposer à ce mouvement. Quand l'équilibre est atteint entre ces deux forces opposées, les particules se déplacent à vitesse constante. La vitesse dépend de l'intensité du champ électrique ou du gradient de tension, de la constante diélectrique du milieu, de la viscosité du milieu et du potentiel Zêta.

On appelle la vitesse de la particule dans un champ électrique unitaire sa mobilité électrophorétique. Le potentiel Zêta est lié à la mobilité électrophorétique par l'équation d'Henry : $U_E = (2\varepsilon\zeta f(\kappa a))/3\eta$ où $U_E$ = mobilité électrophorétique, $\zeta$ = potentiel Zêta, $\varepsilon$ = constante diélectrique, $\eta$ = viscosité et $f(\kappa a)$ = fonction d'Henry. L'unité de $\kappa$, appelé longueur de Debye, est l'inverse d'une longueur et $\kappa^{-1}$ est souvent considéré comme une mesure de « l'épaisseur » de la double couche électrique. Le paramètre 'a' fait référence au rayon de la particule, et par conséquent $\kappa a$ mesure le rapport entre le rayon de la particule et l'épaisseur de la double couche électrique. Les déterminations électrophorétiques du potentiel Zêta sont le plus souvent faites en milieu aqueux et à une concentration d'électrolyte modérée ; $f(\kappa a)$ vaut dans ce cas 1,5 ce qui correspond à l'approximation de Smoluchowski.

Par conséquent, le calcul du potentiel Zêta à partir de la mobilité est simple pour les systèmes pour lesquels le modèle de Smoluchowski convient, c'est-à-dire les particules plus grosses qu'environ 0,2 $\mu$m (200nm) dispersées dans des électrolytes contenant plus de $10^{-3}$M (M=mole.L$^{-1}$) de sel. Pour les petites particules dans les milieux de faible constante diélectrique (par ex. les milieux non aqueux), $f(\kappa a)$ devient égal à 1,0 et permet un calcul aussi simple. C'est ce qu'on appelle l'approximation d'Huckel.

Ainsi, les particules à l'intérieur de la dispersion avec un potentiel Zêta migreront vers l'électrode de charge opposée avec une vitesse proportionnelle à l'amplitude du potentiel Zêta.

L'essence d'un système de microélectrophorèse classique est une cellule capillaire avec des électrodes aux deux extrémités auxquelles un potentiel est appliqué. Les particules se déplacent vers l'électrode, leur vitesse est mesurée et exprimée dans un champ d'intensité unitaire comme leur mobilité. Les premières méthodes impliquaient le processus d'observation directe de particules individuelles à l'aide de techniques ultramicroscopiques et de suivi manuel de leur progression sur une distance mesurée. Cette procédure, bien que toujours employée par de nombreux groupes dans le monde, souffre de plusieurs inconvénients, à commencer par l'effort important nécessaire pour effectuer une mesure, en particulier avec des particules de petite taille ou faiblement diffusantes.

Plus généralement, cette vitesse est mesurée en utilisant la technique de l'anémomètre Doppler laser. Le décalage de fréquence ou le déphasage d'un faisceau laser incident causé par ces particules en mouvement est mesuré comme la mobilité des particules, et cette mobilité est convertie en potentiel Zêta en introduisant la viscosité et la permittivité diélectrique du dispersant, et en appliquant les théories de Smoluchowski.

La série ZÊTASIZER NANO disponible auprès de Malvern Instruments, Royaume-Uni, utilise une combinaison de vélocimétrie Doppler laser et d'analyse de la phase de la lumière diffusée (PALS) dans une technique brevetée appelée M3-PALS pour mesurer la mobilité électrophorétique d'une particule.

Un système de mesure du potentiel Zêta de la série ZÊTASIZER NANO disponible auprès de Malvern Instruments comprend six composants principaux. Tout d'abord, un laser est utilisé pour fournir une source de lumière afin d'éclairer les particules à l'intérieur de l'échantillon. Pour les mesures de potentiel Zêta, cette source de lumière est séparée pour obtenir un faisceau incident et un faisceau de référence. Le faisceau laser incident passe par le centre de la cellule à échantillon, et la lumière diffusée à un angle d'environ 13° est détectée. Quand un champ électrique est appliqué à la cellule, toute particule se déplaçant dans le volume de mesure provoque une fluctuation de l'intensité de lumière détectée avec une fréquence proportionnelle à la vitesse des particules, et cette information est transférée à un processeur de signal numérique puis à un ordinateur. Le logiciel ZÊTASIZER NANO génère un spectre de fréquence à partir duquel la mobilité électrophorétique et donc le potentiel Zêta sont calculés. L'intensité de la lumière diffusée détectée doit se situer dans une gamme spécifique pour que le détecteur la mesure correctement. Pour y parvenir, on utilise un atténuateur, qui ajuste l'intensité de la lumière atteignant l'échantillon et donc l'intensité de la diffusion. Pour corriger une quelconque différence d'épaisseur de paroi de la cellule et de réfraction du dispersant, une optique de compensation est installée pour maintenir un alignement optimal.

La mesure du potentiel Zêta est effectuée sur un appareil ZêtaSizer modèle Nano-ZS commercialisé par la société Malvern Instrument, sur un échantillon de latex ou de slurry dilué x100 dans une solution de NaCl à $10^{-3}$M.

Le protocole de préparation d'échantillon pour la mesure de potentiel Zêta est le suivant: Préparer 1000mL d'une solution mère de NaCl à $10^{-3}$M en introduisant 58mg de NaCl dans une fiole jaugée de 1000mL et compléter avec de l'eau ultra-pure jusqu'au trait de jauge.

Préparer l'échantillon de mesure en introduisant 1mL de latex ou de slurry dans une fiole jaugée de 100mL et compléter jusqu'au trait de jauge avec la solution mère de NaCl à $10^{-3}$M.

Ainsi lorsque l'on a, selon l'invention, des potentiels Zêta $\zeta_1$ et $\zeta_2$ respectivement de la dispersion de charge et du latex d'élastomère synthétique, de signes opposés, la différence de ces potentiels Zêta, $\Delta\zeta$, a une valeur absolue $|\Delta\zeta|$ correspondant à $|\zeta_1 - \zeta_2|$ ; cette valeur $|\Delta\zeta|$ devant être supérieure ou égale à 20mV pour être conforme à l'invention, et plus préférentiellement supérieure ou égale à 30 mV.

*I.2 Mesure du taux de charge par ATG (ou TGA)*

Ce mode opératoire a pour objet de quantifier les catégories de constituants des mélanges de caoutchouterie. On distingue 3 intervalles de température qui correspondent chacun à une catégorie de constituants:

1. entre 250°C et 550°C les matières organiques: élastomères, huiles, agents de vulcanisation etc.
2. entre 550°C et 750°C les charges carbonées.
3. au-delà de 750°C les cendres: ZnO, et silice le cas échéant.

Il s'applique aussi bien aux mélanges crus qu'aux mélanges cuits.

a) - Appareillage

- Ensemble d'analyse thermogravimétrique sur un analyseur de marque METTLER TOLEDO: modèle TGA 851 ou TGA DSC1.
- Balance au 1/100 mg marque et modèle de la balance.
- Creusets alumine de 70μl (sans couvercle) Mettler Toledo réf 00024123.
- Matériel divers de laboratoire: pinces, ciseaux etc.

b) - Principe

On suit les pertes de poids d'un échantillon de mélange soumis à une montée en température. Cette dernière se fait en 2 étapes:

- Chauffage de 25°C à 550°C sous atmosphère inerte ($N_2$) pour évaporer les matières volatiles et réaliser la pyrolyse des matières organiques. La volatilité des produits qui en résultent entraîne une perte de poids correspondant dans un 1$^{er}$ temps (avant 250°C) aux matières volatiles puis aux matières organiques présentes initialement dans le mélange.

- Poursuite du chauffage jusqu'à 750°C sous atmosphère oxydante (Air ou $O_2$) pour réaliser la combustion du noir (et/ou matières charbonnées). La volatilité des produits qui en résulte entraîne une perte de poids correspondant à la quantité initiale de noir (et /ou matières charbonnées).

Les produits qui subsistent après ces traitements constituent les cendres. Il s'agit généralement de matériaux inorganiques type ZnO, silice etc.

c) - Mesures

c)-1- Préparation des échantillons

La quantité de produit analysé doit être pesée à 0.01mg près et comprise entre 20mg et 30mg.
Elle est ensuite placée dans un creuset en alumine de 70μl (sans couvercle)

c)-2- Définition de la « méthode » (programme de température)

- On définit successivement les segments suivants:

  - 1$^{er}$ segment: dynamique de 25°C à 550°C à 50°C/min, sous azote (40ml/min),
  - 2$^{ème}$ segment: dynamique de 550°C à 750°C à 10°C/min, sous air (ou O$_2$) (40ml/min).

- On active le champ « soustraire courbe à blanc ».

Toute mesure est automatiquement corrigée d'une courbe à blanc. Cette dernière est réalisée dans les mêmes conditions que la mesure, avec creuset vide. Elle est mémorisée et utilisée pour toutes les mesures suivantes (pas de nouvel essai à blanc obligatoire avant chaque mesure).

c)-3- Lancement de la mesure

On s'assure au préalable, en consultant la fenêtre de contrôle du four, que les débits d'azote et d'air sont convenablement réglés (40µl/min). Sinon les ajuster à l'aide des réglages situés sur la « boite à gaz ».

• Courbe à blanc

On réalise la courbe à blanc en suivant la procédure décrite dans le manuel d'utilisation du TGA.

• Mesure

On réalise la mesure en suivant la procédure décrite dans le manuel d'utilisation du TGA.

c)-4- Exploitation de la courbe

En suivant les instructions du manuel d'utilisation du TGA

- on sélectionne et on ouvre la courbe à exploiter,
- on délimite sur cette courbe le 1$^{er}$ palier, correspondant aux matières volatiles, entre respectivement 25°C et environ 250°C,
- on calcule la perte de poids correspondant au taux de matières volatiles (en %),
- on délimite sur cette courbe le 2$^{ème}$ palier, correspondant aux matières organiques, entre respectivement la température du 1$^{er}$ palier environ 250°C et 550°C,
- on calcule la perte de poids correspondant au taux de matières organiques (en %),
- on délimite sur cette courbe le 3$^{ème}$ palier, correspondant aux pertes, entre respectivement 550°C et 750°C,
- on calcule la perte de poids correspondant à ces pertes (en %),
- on calcule le résidu ou taux de cendres en %.

c)-5- Présence de composés volatiles

Pour certains mélanges contenant des composés volatiles qui peuvent s'évaporer à température ambiante, il y a un risque de pertes de matière entre la préparation de l'échantillon et le départ effectif de la mesure.
Ces pertes ne sont pas prises en compte par l'appareil.
Pour prendre en compte ces pertes et avoir la composition réelle du mélange, on peut procéder de la façon suivante:
On réalise les étapes c)-1 à c)-3 précédemment décrites avec les 2 consignes suivantes:

- lors de la préparation de l'échantillon: noter le poids du creuset vide (P0) et le poids de l'échantillon P1,
- lors du lancement de la mesure: renseigner le champ "poids de creuset" par P0 et le champ "poids d'échantillon" par P1.

Pour l'exploitation (étape c)-4), le TGA prend en compte, pour déterminer les pertes, la masse de l'échantillon P2 qu'il calcul au départ effectif de la mesure à partir du poids du creuset, ce qui est primordial pour le calcul du résidu ;

P2 est calculé par le TGA en prenant en compte la masse P3 (creuset + échantillon) à au temps T0 - P0.

Le calcul des taux des différents constituants et du résidu est réalisé par rapport au poids d'échantillon P1 défini lors de la préparation et non par rapport à P2.

Le taux de matières volatiles alors calculé par l'appareil est erroné puisqu'une partie de MV, matières volatiles, (P1 - P2) s'est évaporée lors de l'attente entre la préparation et le début effectif de la mesure.

Les MV doivent donc être recalculées manuellement:

- En masse: MV mg = (P1 - P2) mg + pertes 1$^{er}$ palier mg.
- En taux: Tx MV % = MV mg / P1 * 100 ou 100 - résidu 1$^{er}$ palier %.

c)-6- Taux de charge en pcmo

Le taux de charge est exprimé en pcmo, (pcmo = parties en poids pour cent parties de matière organique) et il est obtenu par le calcul, lorsque l'on interprète la mesure d'ATG avec la formule suivante:

$$\text{Tx charge (pcmo)} = [(C) / (B + D)] * 100$$

Dans laquelle B représente le pourcentage de matières organiques (intervalle entre 250°C et 550°C), C le pourcentage de pertes (entre 550°C et 750°C) et D le pourcentage de résidu (au-delà de 750°C).

L'écart en % au taux de charge cible $TC_c$ est calculé avec l'expression suivante dans laquelle $TC_m$ représente le taux de charge mesuré par ATG avec la formule précédente:

$$E(\%) = [(TC_m - TC_c) / (TC_c)] * 100$$

Cette grandeur est complémentaire au rendement de coagulation pour évaluer le niveau de maîtrise de la technologie.

Mesure du rendement de coagulation

Le rendement de coagulation correspond au rapport de la masse sèche récupérée (de laquelle a été ôtée la masse de matières volatiles telle qu'elle est définie dans le protocole de mesure de l'ATG dans les paragraphes précédents) sur la masse visée au départ, multiplié par cent.

## II. DESCRIPTION DETAILLEE DE L'INVENTION

La méthode pour préparer un mélange-maître d'élastomère synthétique et de charge carbonée, selon l'invention, comprend les étapes suivantes:

- préparer une dispersion aqueuse de charge carbonée présentant un potentiel Zêta de signe opposé à celui d'un latex d'élastomère synthétique anionique ou cationique, la différence des potentiels du latex d'élastomère anionique ou cationique et de la dispersion aqueuse de charge carbonée étant telle que sa valeur absolue est supérieure ou égale à 20mV,
- mettre en contact et mélanger le latex de d'élastomère synthétique anionique ou cationique et la dispersion aqueuse de charge carbonée pour obtenir un coagulum,
- récupérer le coagulum,
- sécher le coagulum récupéré pour obtenir le mélange-maître.

*II. 1 Latex d'élastomère synthétique*

Par élastomère sous forme de latex, on entend au sens de la présente invention un élastomère se présentant sous forme de particules d'élastomère dispersées dans l'eau.

L'invention concerne les latex d'élastomères synthétiques, et plus particulièrement les élastomères diéniques qui sont définis comme suit:

Par élastomère ou caoutchouc "diénique", doit être compris de manière connue un élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories: "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention:

(a)- tout homopolymère obtenu par polymérisation d'un monomère diène conjugué ayant de 4 à 12 atomes de carbone;

(b)- tout copolymère obtenu par copolymérisation d'un ou plusieurs diènes conjugués entre eux ou avec un ou plusieurs composés vinyle aromatique ayant de 8 à 20 atomes de carbone;

(c)- un copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;

(d)-un copolymère d'isobutène et d'isoprène (caoutchouc butyle), ainsi que les versions halogénées, en particulier chlorées ou bromées, de ce type de copolymère.

A titre de diènes conjugués conviennent notamment le butadiène-1,3, le 2-méthyl-1,3-butadiène, les 2,3-di(alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, micro séquences, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718, et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973, WO 2009/000750 et WO 2009/000752). Comme autres exemples d'élastomères fonctionnalisés, on peut citer également des élastomères (tels que SBR, BR, NR ou IR) du type époxydés.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et -70°C et plus particulièrement entre -10°C et -60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de -40°C à -80°C, les copolymères isoprène-styrène et notamment ceux ayant une teneur en styrène comprise entre 5% et 50% en poids et une Tg comprise entre -5 C et -50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre -5°C et -70°C.

En résumé, le ou les élastomères diéniques de la composition selon l'invention sont choisis préférentiellement dans le groupe des élastomères diéniques fortement insaturés constitué par les polybutadiènes (en abrégé "BR"), les polyisoprènes (IR) de synthèse, les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Le latex d'élastomère diénique synthétique (ou latex de caoutchouc synthétique) peut consister en un élastomère diénique synthétique déjà disponible sous forme d'émulsion (par exemple un copolymère de butadiène et de styrène, SBR, préparé en émulsion), ou en un élastomère diénique synthétique initialement en solution (par exemple un SBR préparé en solution) qui est émulsifié dans un mélange de solvant organique et d'eau, généralement au moyen d'un agent tensio-actif.

Convient particulièrement à l'invention un latex de SBR, notamment un SBR préparé en émulsion ("ESBR") ou un SBR préparé en solution ("SSBR"), et plus particulièrement un SBR préparé en émulsion.

Il existe deux grands types de procédés de copolymérisation en émulsion du styrène et de butadiène, l'un d'entre eux, ou procédé à chaud (mis en oeuvre à une température proche de 50°C), étant adapté pour la préparation de SBR très ramifiés alors que l'autre, ou procédé à froid (mis en oeuvre à une température pouvant aller de 15°C à 40°C), permet d'obtenir des SBR plus linéaires.

Pour une description détaillée de l'efficacité de plusieurs émulsifiants utilisables dans ledit procédé à chaud (en fonction des taux desdits émulsifiants), on pourra par exemple se reporter aux deux articles de C. W. Carr,. M. Kolthoff, E. J. Meehan, University of Minesota, Minneapolis, Minesota qui ont paru dans Journal of Polymer Science de 1950, Vol. V, n°2, pp. 201-206, et de 1951, Vol. VI, n°1, pp. 73-81.

Concernant des exemples comparatifs de mise en oeuvre dudit procédé à froid, on pourra par exemple se reporter à l'article ½ Industrial and Engineering Chemistry, 1948, Vol. 40, n°5, pp. 932-937, E. J. Vandenberg, G. E. Hulse, Hercules Powder Company, Wilmington, Delaware + et à l'article ½ Industrial and Engineering Chemistry, 1954, Vol. 46, n°5, pp. 1065-1073, J. R. Miller, H. E. Diem, B. F. Goodrich Chemical Co. , Akron, Ohio +.

Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35% à 45%, une teneur en liaisons vinyliques de la partie butadiénique comprise entre 15% et 70%, une teneur (% molaire) en liaisons trans-1,4 comprise entre 15% et 75% et une Tg comprise entre -10°C et -55°C; un tel SBR peut être avantageusement utilisé en mélange avec un BR possédant de préférence plus de 90% (% molaire) de liaisons cis-1,4.

On entend par latex d'élastomère anionique ou cationique, un latex dont le potentiel Zêta est strictement inférieur à 0mV ou respectivement strictement supérieur à 0mV, et dont la valeur absolue est supérieure ou égale à 10mV. En effet cette limite inférieure permet de s'assurer de la stabilité de la mesure effectuée.

*II. 2 Préparation de la dispersion aqueuse de charge carbonée*

Pour l'invention peut être utilisée toute charge carbonée, telle que les noirs de carbone, les graphites naturels et synthétiques, les fibres de carbone, les graphènes, les fullerènes, les noirs d'acétylène et les nanotubes de carbone.

Conviennent particulièrement à l'invention les noirs de carbone conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées 500, 600 ou 700, par exemple les noirs N550, N660, N683, N772 (grades ASTM).

La charge carbonée est ensuite dispersée dans de l'eau, de préférence de sorte à obtenir une dispersion dont la viscosité est suffisante pour être aisément « manipulable ». Ainsi pour le noir de carbone, on préfèrera une concentration massique de noir dans la dispersion comprise entre 1% et 15%. On pourra par exemple réaliser une dispersion aqueuse de noir de carbone avec un taux de noir dans l'eau de 4% en poids. Avantageusement pour réaliser la dispersion de noir de carbone, on peut utiliser un homogénéisateur (tel qu'un appareil de nom commercial « Ultra Turrax » commercialisé par la société IKA) puis un microfluidiseur (commercialisé par la société Micro fluidicscorp).

Dans une deuxième étape optionnelle on introduit dans la dispersion aqueuse de charge carbonée une quantité définie de solution aqueuse de tensio-actif afin de contrôler le potentiel Zêta des particules de la dispersion pour que ce dernier soit tel que la différence des potentiels du latex d'élastomère anionique ou cationique et de la dispersion aqueuse de charge carbonée a une valeur absolue supérieure ou égale à 20mV.

De préférence, la charge carbonée comprend du noir de carbone, et encore plus préférentiellement, la charge carbonée est constituée par du noir de carbone.

*II. 3 Mise en contact des deux dispersions*

Selon un mode de réalisation de la méthode, la mise en contact et le mélangeage du latex d'élastomère et de la dispersion aqueuse de charge carbonée peuvent être effectués en continu.

Selon un mode privilégié de réalisation de la méthode, la mise en contact et le mélangeage du latex d'élastomère et de la dispersion aqueuse de charge carbonée sont effectués par lot ou en « batch ».

Dans le cas d'une mise en contact en « batch », une quantité définie de dispersion aqueuse de charge carbonée est introduite dans une quantité définie de latex d'élastomère peut être réalisée notamment selon le protocole suivant:

- on pèse une quantité définie de latex d'élastomère dans un bécher de 200mL,
- on introduit un barreau aimanté dans le bécher et mettre sous agitation magnétique le latex d'élastomère,
- on pèse une quantité définie de dispersion aqueuse de charge carbonée dans un bécher de 200mL,
- on introduit la dispersion aqueuse de charge carbonée en une fois dans le bécher contenant le latex d'élastomère sous agitation magnétique.

Les masses de latex d'élastomère et de dispersion aqueuse de charge carbonée à peser sont définies directement par la masse de mélange-maître ciblée, le taux de charge ciblé dans le mélange-maître et les fractions massiques respectives du latex d'élastomère et de la dispersion aqueuse de charge carbonée.

Les masses de latex d'élastomère $m_L$ et de dispersion aqueuse de charge carbonée $m_S$ à peser sont définies à partir des expressions suivantes:

$$m_L = (100 \,/\, FM_L) * [(mMB_C) \,/\, (1 + (TC_C \,/\, 100))]$$

$$m_S = (100 \,/\, FM_S) * [(100 \,/\, FM_L) * (TC_C \,/\, 100)]$$

Avec $FM_L$ la fraction massique du latex d'élastomère exprimée en % ; $FM_S$ la fraction massique de la dispersion aqueuse de charge carbonée exprimée en % ; $TC_C$ le taux de charge cible exprimé en pcmo et $mMB_C$ la masse de mélange-maître ciblée. Avantageusement le taux de charge carbonée visé pour le mélange-maître va de 2 pcmo à 150 pcmo (parties en poids pour cent parties de matière organique).

En particulier lorsque la charge carbonée comprend majoritairement du noir de carbone, le taux visé va de préférence de 30 pcmo à 110 pcmo et encore plus préférentiellement de 40 pcmo à 100 pcmo.

Pour réaliser la mise en contact et le mélange de ces deux dispersions, on peut également utiliser tout type d'appareil permettant un mélange « efficace » de deux produits en phase liquide, ainsi on pourra utiliser un mélangeur réalisant un haut cisaillement tel que des mélangeurs commercialisés par TOKUSHU KIKA KOGYO Co., Ltd., ou par la société PUC en Allemagne, par la société CAVITRON en Allemagne ou par la société SILVERSON au Royaume Uni.

Il est clair que plus l'étape de mélange est efficace, meilleure est la dispersion. Donc on préfèrera des mélangeurs tels que les mélangeurs à haut cisaillement.

Lors de cette phase de mélange des deux dispersions, un coagulum d'élastomère et de charge carbonée se forme soit sous forme d'un seul élément solide dans la solution, soit sous forme de plusieurs éléments solides séparés (coagulum et effluents aqueux).

*II. 4 Récupération du solide formé*

Le ou les solides récupérés sont filtrés ou centrifugés. En effet, l'opération de filtrage qui peut être réalisée à l'aide d'un tamis de filtration, peut s'avérer inadaptée lorsque le coagulum se présente sous forme de nombreux et petits éléments solides. Dans un tel cas, on réalise de préférence une opération de centrifugation supplémentaire.

A l'issue de cette étape de filtrage ou de centrifugation, le coagulum obtenu est séché, par exemple à l'étuve.

A l'issue de cette opération, on procède à la mesure du taux de charge par ATG et du rendement de coagulation.

*II. 5 Composition de caoutchouc*

Avantageusement les mélanges-maîtres ainsi réalisés sont susceptibles d'être utilisés dans des compositions de caoutchouc, notamment pour pneumatique.

Les compositions de caoutchouc pour pneumatique à base des mélanges-maîtres selon l'invention, peuvent comporter également tout ou partie des additifs usuels habituellement utilisés dans les compositions d'élastomères destinées à la fabrication de pneumatiques, en particulier de bandes de roulement, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation.

De préférence, ces compositions comportent, à titre d'agent plastifiant préférentiel non aromatique ou très faiblement aromatique, au moins un composé choisi dans le groupe constitué par les huiles naphténiques, paraffiniques, huiles MES, huiles TDAE, les esters (en particulier trioléates) de glycérol, les résines plastifiantes hydrocarbonées présentant une haute Tg de préférence supérieure à 30°C, et les mélanges de tels composés.

*II. 6 Fabrication des compositions de caoutchouc*

Les compositions de caoutchouc de l'invention sont fabriquées dans des mélangeurs appropriés, en utilisant deux phases de préparation successives selon une procédure générale bien connue de l'homme du métier: une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

A titre d'exemple, la première phase (non-productive) est conduite en une seule étape thermomécanique au cours de laquelle on introduit, dans un mélangeur approprié tel qu'un mélangeur interne usuel, tous les constituants nécessaires à l'exception du système de vulcanisation. La durée totale du malaxage, dans cette phase non-productive, est de préférence comprise entre 1min et 15min. Après refroidissement du mélange ainsi obtenu au cours de la première phase non-productive, on incorpore alors le système de vulcanisation à basse température, généralement dans un mélangeur externe tel qu'un mélangeur à cylindres; le tout est alors mélangé (phase productive) pendant quelques minutes, par exemple entre 2min et 15min.

Le système de vulcanisation proprement dit est préférentiellement à base de soufre et d'un accélérateur primaire de vulcanisation, en particulier d'un accélérateur du type sulfénamide. A ce système de vulcanisation peuvent venir s'ajouter, incorporés au cours de la première phase non-productive et/ou au cours de la phase productive, divers accélérateurs secondaires ou activateurs de vulcanisation connus, à l'exclusion du zinc et de tout dérivé de zinc tel que ZnO ou en respectant une teneur en zinc de la composition inférieure à 0,5pce, et de préférence inférieure à 0,3pce, tels que par exemple des acides gras comme l'acide stéarique, des dérivés guanidiques (en particulier diphénylguanidine), etc. Le taux de soufre est de préférence compris entre 0,5pce et 3,0pce, celui de l'accélérateur primaire est de préférence compris entre 0,5pce et 5,0pce.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable par exemple comme une bande de roulement de pneumatique pour véhicule tourisme.

## III EXEMPLES DE REALISATION DE L'INVENTION

*III. 1 Préparation de la dispersion aqueuse de charge carbonée*

La préparation d'une dispersion aqueuse de charge carbonée consiste dans une première étape à disperser mécaniquement la charge, ici du noir de carbone N234 commercialisé par la société Cabot Corporation, en phase aqueuse selon le protocole suivant:

- Peser une masse définie d'eau ultra-pure dans un bécher de 1000mL.
- Peser une masse définie de charge carbonée dans le même bécher.
- Effectuer une première étape de dispersion avec un homogénéiseur/disperseur IKA modèle T25 Digital Ultra-Turrax® avec rotor-stator du type S 25 N-25 G-ST à une vitesse de 18000rpm pendant 10min dans le même bécher.
- Effectuer une deuxième étape de dispersion avec un microfluidiseur modèle M-110P avec cellule de dispersion 87$\mu$m de diamètre commercialisé par la société MICROFLUIDICS, de tout le volume de dispersion aqueuse de charge carbonée contenu dans le bécher avec une cellule de 87$\mu$m.

Les masses d'eau ultra-pure et de charge à introduire dans le bécher sont définies directement par le taux de charge ciblé dans la dispersion aqueuse de charge carbonée et la quantité totale de dispersion aqueuse de charge carbonée à réaliser.

Pour tous ces exemples la fraction massique du slurry de N234 ($FM_S$) est de 4%.

Pour le calcul de la quantité de solution de SDS ou de solution de CTACl à introduire dans le slurry de N234 avant mise en contact on fait une hypothèse de taux d'adsorption optimal égal à 1.4 molécules/nm$^2$ en surface du noir pour le SDS comme pour le CTACl, ce qui permet de déduire les quantités de SDS et de CTACl à introduire connaissant la surface spécifique du N234: 120m$^2$/g.

Pour une description détaillée de l'origine technique du taux optimal choisit de 1.4 molécules/nm$^2$ de SDS ou de CTACl à adsorber en surface du N234, on pourra se reporter à l'article de Martínez-Pedrero, F., Alousque, F., De Gaudemaris, B., Berriot, J., Gaboriaud, F., Bremond, N., Bibette, J. paru dans Soft Matter de 2012, Vol. VIII, n°33, pp. 8752-8757.

Le tableau 1 qui suit, indique pour les dispersions de noir de carbone avec l'agent tensio-actif considéré, les valeurs de potentiel Zéta obtenues conformément à la méthode de préparation d'échantillon décrite précédemment et suivant le protocole de mesure décrit dans le manuel de l'utilisateur du ZêtaSizer Nano-ZS de Malvern Instruments.

_III. 2 Préparation des latex d'élastomères synthétiques_

Trois latex distincts ont été utilisés pour réaliser les essais qui suivent:

- un latex e-SBR à une fraction massique de 20.6% commercialisé sous le nom « SB Latex 1502 » par la société SYNTHOS ; désigné ici par Latex 1,
- un latex e-SBR à une fraction massique de 50.4% commercialisé sous le nom « Litex SX 1024 » par la société SYNTHOMER ; désigné ici par Latex 2,
- un latex e-SBR à une fraction massique de 4.5% synthétisé selon le procédé décrit dans la demande de brevet WO96/19511 ci-après désigné ici par Latex 3.

Le tableau 2 indique pour les latex d'élastomères précités, les valeurs de potentiel Zéta obtenues conformément à la méthode de préparation d'échantillon décrite précédemment et suivant le protocole de mesure décrit dans le manuel de l'utilisateur du ZêtaSizer Nano-ZS de Malvern Instruments.

_III. 3 Préparation des mélanges-maîtres_

Les mélanges-maîtres sont réalisés par une mise en contact en « batch », une quantité définie de dispersion aqueuse de noir de carbone N234 préparée selon l'enseignement du paragraphe III.1, est introduite dans une quantité définie de latex d'élastomère selon le protocole suivant:

- on pèse une quantité définie de latex d'élastomère dans un bécher de 200mL,
- on introduit un barreau aimanté dans le bécher et mettre sous agitation magnétique le latex d'élastomère,
- on pèse une quantité définie de dispersion aqueuse de charge carbonée dans un bécher de 200mL,
- on introduit la dispersion aqueuse de charge carbonée en une fois dans le bécher contenant le latex d'élastomère sous agitation magnétique.

Pour chaque taux de charge ciblé dans les mélanges-maîtres, sont indiqués dans le tableau 3 qui suit, les masses de latex d'élastomère, de dispersion aqueuse de noir de carbone, d'agents tensio-actifs utilisés ainsi que les fractions massiques respectives du latex d'élastomère et de la dispersion aqueuse de noir de carbone.

Lors de cette phase de mélange des deux dispersions, un coagulum d'élastomère et de charge carbonée se forme soit sous forme d'un seul élément solide dans la solution, soit sous forme de plusieurs éléments solides séparés.

Le mélange est maintenu quelques minutes sous agitation magnétique avant récupération du coagulum formé. Afin d'avoir pour les différents essais des conditions identiques du mode opératoire, le coagulum formé ou les solides formés (couramment appelés « crumbs ») sont centrifugés, y compris dans les cas où l'aspect visuel du coagulum permettait de d'envisager une opération de filtrage.

Selon un mode privilégié de réalisation de la méthode, le coagulum est séparé des effluents par centrifugation après transfert dans un flacon en nalgène de 250mL à l'aide d'une centrifugeuse à godets Sigma 4K15 commercialisée par la société SIGMA, à la température de 20°C et à une vitesse de 9000rpm pendant 15min.

Le mélange-maître est obtenu par séchage du coagulum dans une étuve à 60°C sous 200mbars de pression jusqu'à un taux d'humidité inférieur à 1% en masse.

On procède alors à la mesure du taux de charge par ATG (comme décrit en détails au début de la description) et du rendement de coagulation.

Le rendement de coagulation s'exprime comme la fraction en poids exprimée en % de la masse de mélange-maître mMB rapportée à la masse de mélange-maître ciblée:

$$R(\%) = (mMB / mMB_C) * 100$$

La mesure du rendement de coagulation permet de quantifier de manière directe l'efficacité de la présente méthode générique de coagulation.

*III. 4 Essais*

Par la méthode décrite ci-dessus, ont été réalisés pour chacun des trois latex précités:

- des mélanges-maîtres avec une dispersion de N134 sans présence d'agents tensio-actifs avec des taux de charge ciblés de 60 pcmo, 80 pcmo et 100 pcmo,
- des mélanges-maîtres avec une dispersion de N134 contenant du SDS telle que décrite précédemment avec des taux de charge ciblés de 60 pcmo, 80 pcmo et 100 pcmo,
- des mélanges-maîtres avec une dispersion de N134 contenant du CTACl telle que décrite précédemment avec des taux de charge ciblés de 60 pcmo, 80 pcmo et 100 pcmo.

Les mélanges-maîtres A1, B1 et C1 correspondent respectivement tous à des mélanges-maîtres réalisés selon les paragraphes III.1 à III.3, à partir du Latex 1 et du noir de carbone N234, avec les différences suivantes:

- $A1_{60}$ est un mélange-maître réalisé avec une dispersion de noir de carbone sans tensio-actifs et avec un taux de charge ciblé de 60 pcmo,
- $A1_{80}$ est identique à $A1_{60}$ mais avec un taux de charge ciblé de 80 pcmo,
- $A1_{100}$ est identique à $A1_{60}$ mais avec un taux de charge ciblé de 100 pcmo,
- $B1_{60}$ est un mélange-maître réalisé avec une dispersion de noir de carbone incluant du SDS et avec un taux de charge ciblé de 60 pcmo,
- $B1_{80}$ est identique à $B1_{60}$ mais avec un taux de charge ciblé de 80 pcmo,
- $B1_{100}$ est identique à $B1_{60}$ mais avec un taux de charge ciblé de 100 pcmo,
- $C1_{60}$ est un mélange-maître réalisé avec une dispersion de noir de carbone incluant du CTACl et avec un taux de charge ciblé de 60 pcmo,
- $C1_{80}$ est identique à $C1_{60}$ mais avec un taux de charge ciblé de 80 pcmo,
- $C1_{100}$ est identique à $C1_{60}$ mais avec un taux de charge ciblé de 100 pcmo.

Le tableau 4 présente pour les mélanges-maîtres précédents les valeurs obtenues de l'écart au taux de charge ciblé (mesurées par ATG comme détaillé précédemment dans la description) ainsi que les rendements de la coagulation obtenus (tels que décrits également précédemment).
De la même façon, les mélanges-maîtres A2, B2 et C2 correspondent respectivement tous à des mélanges-maîtres réalisés selon les paragraphes III.1 à III.3, à partir du Latex 2 et du noir de carbone N234, avec les différences suivantes:

- $A2_{60}$ est un mélange-maître réalisé avec une dispersion de noir de carbone sans tensio-actifs et avec un taux de charge ciblé de 60 pcmo,
- $A2_{80}$ est identique à $A2_{60}$ mais avec un taux de charge ciblé de 80 pcmo,
- $A2_{100}$ est identique à $A2_{60}$ mais avec un taux de charge ciblé de 100 pcmo,
- $B2_{60}$ est un mélange-maître réalisé avec une dispersion de noir de carbone incluant du SDS et avec un taux de charge ciblé de 60 pcmo,
- $B2_{80}$ est identique à $B2_{60}$ mais avec un taux de charge ciblé de 80 pcmo,
- $B2_{100}$ est identique à $B2_{60}$ mais avec un taux de charge ciblé de 100 pcmo,
- $C2_{60}$ est un mélange-maître réalisé avec une dispersion de noir de carbone incluant du CTACl et avec un taux de charge ciblé de 60 pcmo,
- $C2_{80}$ est identique à $C2_{60}$ mais avec un taux de charge ciblé de 80 pcmo,
- $C2_{100}$ est identique à $C2_{60}$ mais avec un taux de charge ciblé de 100 pcmo.

Le tableau 5 présente pour les mélanges-maîtres précédents les valeurs obtenues de l'écart au taux de charge ciblé (mesurées par ATG comme détaillé précédemment dans la description) ainsi que les rendements de la coagulation obtenus (tels que décrits également précédemment).
Enfin, les mélanges-maîtres A3, B3 et C3 correspondent respectivement tous là des mélanges-maîtres réalisés selon les paragraphes III.1 à III.3, à partir du Latex 3 et du noir de carbone N234, avec les différences suivantes:

- A3$_{60}$ est un mélange-maître réalisé avec une dispersion de noir de carbone sans tensio-actifs et avec un taux de charge ciblé de 60 pcmo,
- A3$_{80}$ est identique à A3$_{60}$ mais avec un taux de charge ciblé de 80 pcmo,
- A3$_{100}$ est identique à A3$_{60}$ mais avec un taux de charge ciblé de 100 pcmo,
- B3$_{60}$ est un mélange-maître réalisé avec une dispersion de noir de carbone incluant du SDS et avec un taux de charge ciblé de 60 pcmo,
- B3$_{80}$ est identique à B3$_{60}$ mais avec un taux de charge ciblé de 80 pcmo,
- B3$_{100}$ est identique à B3$_{60}$ mais avec un taux de charge ciblé de 100 pcmo,
- C3$_{60}$ est un mélange-maître réalisé avec une dispersion de noir de carbone incluant du CTACl et avec un taux de charge ciblé de 60 pcmo,
- C3$_{80}$ est identique à C3$_{60}$ mais avec un taux de charge ciblé de 80 pcmo,
- C3$_{100}$ est identique à C3$_{60}$ mais avec un taux de charge ciblé de 100 pcmo.

Le tableau 6 présente pour les mélanges-maîtres précédents les valeurs obtenues de l'écart au taux de charge ciblé (mesurées par ATG comme détaillé précédemment dans la description) ainsi que les rendements de la coagulation obtenus (tels que décrits également précédemment).

Au vu des trois tableaux 4, 5 et 6, on constate que quel que soit les latex d'élastomères synthétiques, anioniques ou cationiques, il n'y a pas de coagulation entre un latex d'élastomère synthétiques et une dispersion de noir de carbone sans tensio-actif (l'ensemble des mélanges maîtres A1, A2 et A3) soit car on a un taux de coagulation très inférieur à 80 %, soit parce qu'on obtient un écart au taux de charge ciblé supérieur à 20%, et ceci quel que soit le taux de charge ciblé.

On constate également que les mélanges maîtres réalisés à partir d'un latex d'élastomère synthétiques anioniques et d'une dispersion de charge de potentiel Zêta négatif (mélanges maîtres B1 et B2) quel que soit le taux de charge ciblé, ne permettent pas d'obtenir un rendement et simultanément un écart au taux de charge ciblé acceptables. De la même façon on constate que quel que soit le taux de charge ciblé, les mélanges maîtres réalisé à parti d'un latex d'élastomère synthétiques cationiques et d'une dispersion de charge de potentiel Zêta positif (mélanges maîtres C3), ne permettent pas d'obtenir un rendement et simultanément un écart au taux de charge ciblé acceptables.

Conformément à l'invention, on constate que les mélanges maîtres réalisés à partir de latex d'élastomères diéniques synthétiques anioniques ou cationiques et de dispersion de charge de potentiel Zêta opposé (mélanges maîtres B3, C1 et C2) permettent quel que soit le taux de charge ciblé, de présenter à la fois un rendement acceptable (supérieur à 80%) et un écart au taux de charge ciblé acceptable (inférieur à 20%).

Tableau 1

| N234 - tensio-actif | N234 - SDS | N234 - CTACl |
|---|---|---|
| Potentiel Zêta (mV) | -51 $\pm$2 | +47 $\pm$2 |

Tableau 2

| Latex | LATEX 1 | LATEX 2 | LATEX 3 |
|---|---|---|---|
| Potentiel Zêta (mV) | -42 $\pm$2 | -40 $\pm$2 | +51 $\pm$2 |

Tableau 3

| Charge - tensio-actif | N234 - SDS ($\zeta$<0) | | | N234 - CTACl ($\zeta$>0) | | |
|---|---|---|---|---|---|---|
| Taux de charge cible $TC_c$ (pcmo) | 60 | 80 | 100 | 60 | 80 | 100 |
| Fraction volumique de charge (%) | 25,0 | 30,8 | 35,7 | 25,0 | 30,8 | 35,7 |
| | | | | | | |
| Pesées | | | | | | |
| Dispersion N234 | 187,5 | 222,2 | 250,0 | 187,5 | 222,2 | 250,0 |
| Solution aqueuse de SDS à 20% en poids | 0,6 | 0,7 | 0,8 | - | - | - |
| Solution aqueuse de CTACl à 25% en poids | - | - | - | 0,7 | 0,8 | 0,9 |
| LATEX 1 | 60,7 | 53,9 | 48,5 | 60,7 | 53,9 | 48,5 |

(suite)

| Pesées | | | | | | |
|---|---|---|---|---|---|---|
| **LATEX 2** | 24,8 | 22,0 | 19,8 | 24,8 | 22,0 | 19,8 |
| **LATEX 3** | 277,8 | 246,9 | 222,2 | 277,8 | 246,9 | 222,2 |

Tableau 4

| Mélanges-maîtres | $A1_{60}$ | $A1_{80}$ | $A1_{100}$ | $B1_{60}$ | $B1_{80}$ | $B1_{100}$ | $C1_{60}$ | $C1_{80}$ | $C1_{100}$ |
|---|---|---|---|---|---|---|---|---|---|
| **Ecart au taux de charge ciblé (%)** | 686 | 561 | 752 | 743 | 551 | 735 | -3 | 6 | 1 |
| **Rendement de coagulation (%)** | 44.5 | 51 | 54 | 40 | 47 | 52.5 | 100 | 87.5 | 97 |

Tableau 5

| Mélanges-maîtres | $A2_{60}$ | $A2_{80}$ | $A2_{100}$ | $B2_{60}$ | $B2_{80}$ | $B2_{100}$ | $C2_{60}$ | $C2_{80}$ | $C2_{100}$ |
|---|---|---|---|---|---|---|---|---|---|
| **Ecart au taux de charge ciblé (%)** | 187 | 155 | 421 | 287 | 338 | 535 | 15 | -17 | -6 |
| **Rendement de coagulation (%)** | 56.5 | 63.5 | 57.5 | 46.5 | 52.5 | 55 | 91 | 83 | 96.5 |

Tableau 6

| Mélanges-maîtres | $A3_{60}$ | $A3_{0}$ | $A3_{100}$ | $B3_{60}$ | $B3_{80}$ | $B3_{100}$ | $C3_{60}$ | $C3_{80}$ | $C3_{100}$ |
|---|---|---|---|---|---|---|---|---|---|
| **Ecart au taux de charge ciblé (%)** | 104 | 84 | 24 | 4 | 10 | 6 | 664 | 537 | 471 |
| **Rendement de coagulation (%)** | 70.5 | 72.5 | 89 | 98 | 93 | 91 | 43 | 50.5 | 51.5 |

**Revendications**

1.  Méthode pour préparer un mélange-maître d'élastomère synthétique et de charge carbonée, qui comprend les étapes suivantes:

    - préparer une dispersion aqueuse de charge carbonée présentant un potentiel Zêta de signe opposé à celui d'un latex d'élastomère synthétique anionique ou cationique, la différence des potentiels du latex d'élastomère anionique ou cationique et de la dispersion aqueuse de charge carbonée étant telle que sa valeur absolue est supérieure ou égale à 20mV,
    - mettre en contact et mélanger le latex de d'élastomère synthétique anionique ou cationique et la dispersion aqueuse de charge carbonée pour obtenir un coagulum,
    - récupérer le coagulum,
    - sécher le coagulum récupéré pour obtenir le mélange-maître.

2.  Méthode selon la revendication 1, dans laquelle l'élastomère synthétique est un élastomère synthétique diénique.

3.  Méthode selon l'une quelconque des revendications 1 ou 2, dans laquelle les potentiels Zêta du latex d'élastomère anionique ou cationique et de la dispersion aqueuse de charge carbonée présentent une différence dont la valeur absolue est supérieure ou égale à 30mV.

4.  Méthode selon l'une quelconque des revendications 1 à 3, dans laquelle la dispersion aqueuse de charge carbonée contient un agent tensio-actif de signe opposé à celui du latex d'élastomère synthétique.

5.  Méthode selon l'une quelconque des revendications 1 à 4, dans laquelle le latex d'élastomère synthétique anionique ou cationique contient au moins un tensio-actif respectivement anionique ou cationique.

**6.** Méthode selon l'une quelconque des revendications 1 à 5, dans laquelle le latex d'élastomère synthétique est obtenu par polymérisation en phase aqueuse.

**7.** Méthode selon la revendication 6, dans laquelle le latex d'élastomère synthétique est obtenu par émulsification en phase aqueuse d'un élastomère diénique.

**8.** Méthode selon l'une quelconque des revendications précédentes, dans laquelle le latex d'élastomère synthétique est un latex de copolymère de butadiène et de styrène, de préférence le latex d'élastomère synthétique est un SBR préparé en émulsion.

**9.** Méthode selon l'une quelconque des revendications précédentes, dans laquelle la quantité de charge carbonée lors de la mise en contact de deux dispersions aqueuses va de 2 pcmo à 150 pcmo, parties en poids pour cent parties de matière organique.

**10.** Méthode selon la revendication 9, dans laquelle la charge carbonée comprend du noir de carbone ; de préférence la charge carbonée est constituée par du noir de carbone.

**11.** Méthode selon la revendication 10, dans laquelle la quantité de charge carbonée lors de la mise en contact de deux dispersions aqueuses va de 30 pcmo à 110 pcmo ; de préférence la quantité de charge carbonée lors de la mise en contact de deux dispersions aqueuses va de 40 pcmo à 100 pcmo.

**12.** Mélange-maître d'élastomère diénique synthétique et de charge carbonée obtenu selon l'une quelconque des revendications 1 à 11.

**13.** Composition élastomérique à base d'au moins un mélange-maître selon la revendication 12.

**14.** Article fini ou semi-fini comportant une composition selon la revendication 13.

**15.** Bande de roulement de pneumatique comportant une composition selon la revendication 13.

**16.** Pneumatique ou produit semi-fini comportant au moins une composition de caoutchouc selon la revendication 13.

**Patentansprüche**

**1.** Verfahren zur Herstellung eines Masterbatches aus synthetischem Elastomer und kohlenstoffhaltigem Füllstoff, das folgende Schritte umfasst:

- Herstellen einer wässrigen Dispersion des kohlenstoffhaltigen Füllstoffs, die ein Zeta-Potenzial mit einem Vorzeichen aufweist, das dem eines anionischen oder kationischen synthetischen Elastomerlatex entgegengesetzt ist, wobei der Potenzialunterschied des anionischen oder kationischen Elastomerlatex und der wässrigen Dispersion des kohlenstoffhaltigen Füllstoffs derart ist, dass dessen Absolutwert größer gleich 20 mV beträgt,
- Inkontaktbringen und Mischen des anionischen oder kationischen synthetischen Elastomerlatex und der wässrigen Dispersion des kohlenstoffhaltigen Füllstoffs zum Erhalten eines Koagulats,
- Gewinnen des Koagulats,
- Trocknen des gewonnenen Koagulats zum Erhalten des Masterbatches.

**2.** Verfahren nach Anspruch 1, wobei das synthetische Elastomer ein synthetisches Dienelastomer ist.

**3.** Verfahren nach Anspruch 1 oder 2, wobei das Zeta-Potenzial des anionischen oder kationischen Elastomerlatex und der wässrigen Dispersion des kohlenstoffhaltigen Füllstoffs einen Unterschied aufweisen, dessen Absolutwert größer gleich 30 mV beträgt.

**4.** Verfahren nach einem der Ansprüche 1 bis 3, wobei die wässrige Dispersion des kohlenstoffhaltigen Füllstoffs ein Tensid mit einem Vorzeichen enthält, das dem des synthetischen Elastomerlatex entgegengesetzt ist.

**5.** Verfahren nach einem der Ansprüche 1 bis 4, wobei der anionische oder kationische synthetische Elastomerlatex mindestens ein anionisches beziehungsweise kationisches Tensid enthält.

**6.** Verfahren nach einem der Ansprüche 1 bis 5, wobei der synthetische Elastomerlatex durch Polymerisation in wässriger Phase erhalten wird.

**7.** Verfahren nach Anspruch 6, wobei der synthetische Elastomerlatex durch Emulgieren eines Dienelastomers in wässriger Phase erhalten wird.

**8.** Verfahren nach einem der vorhergehenden Ansprüche, wobei der synthetische Elastomerlatex ein StyrolButadien-Copolymer-Latex ist, wobei der synthetische Elastomerlatex vorzugsweise ein in Emulsion hergestellter SBR ist.

**9.** Verfahren nach einem der vorhergehenden Ansprüche, wobei die Menge des kohlenstoffhaltigen Füllstoffs beim Inkontaktbringen von zwei wässrigen Dispersionen von 2 METOS bis 150 METOS, Massenanteile auf einhundert Teile organische Substanz, reicht.

**10.** Verfahren nach Anspruch 9, wobei der kohlenstoffhaltige Füllstoff Ruß umfasst; wobei der kohlenstoffhaltige Füllstoff vorzugsweise von Ruß gebildet wird.

**11.** Verfahren nach Anspruch 10, wobei die Menge des kohlenstoffhaltigen Füllstoffs beim Inkontaktbringen von zwei wässrigen Dispersionen von 30 METOS bis 110 METOS reicht; wobei die Menge des kohlenstoffhaltigen Füllstoffs beim Inkontaktbringen von zwei wässrigen Dispersionen von 40 METOS bis 100 METOS reicht.

**12.** Masterbatch aus synthetischem Dienelastomer und kohlenstoffhaltigem Füllstoff, der nach einem der Ansprüche 1 bis 11 erhalten wird.

**13.** Elastomerzusammensetzung auf Basis von mindestens einem Masterbatch nach Anspruch 12.

**14.** Fertig- oder Halbfertigerzeugnis, das eine Zusammensetzung nach Anspruch 13 aufweist.

**15.** Reifenlauffläche, die eine Zusammensetzung nach Anspruch 13 aufweist.

**16.** Reifen oder Halbfertigerzeugnis, der bzw. das mindestens eine Kautschukzusammensetzung nach Anspruch 13 aufweist.

**Claims**

**1.** Method for preparing a masterbatch of synthetic elastomer and of carbon-based filler, which comprises the following steps:

- preparing an aqueous dispersion of carbon-based filler having a zeta potential with the opposite sign to that of an anionic or cationic synthetic elastomer latex, the difference between the potentials of the anionic or cationic elastomer latex and the aqueous dispersion of carbon-based filler being such that the absolute value thereof is greater than or equal to 20 mV,
- bringing together, and mixing, the anionic or cationic synthetic elastomer latex and the aqueous dispersion of carbon-based filler to obtain a coagulum,
- recovering the coagulum,
- drying the recovered coagulum in order to obtain the masterbatch.

**2.** Method according to Claim 1, in which the synthetic elastomer is a synthetic diene elastomer.

**3.** Method according to either one of Claims 1 and 2, in which the difference between the zeta potentials of the anionic or cationic elastomer latex and of the aqueous dispersion of carbon-based filler has an absolute value which is greater than or equal to 30 mV.

**4.** Method according to any one of Claims 1 to 3, in which the aqueous dispersion of carbon-based filler contains a surfactant with the opposite sign to that of the synthetic elastomer latex.

**5.** Method according to any one of Claims 1 to 4, in which the anionic or cationic synthetic elastomer latex contains at least one surfactant, respectively anionic or cationic.

6. Method according to any one of Claims 1 to 5, in which the synthetic elastomer latex is obtained by aqueous phase polymerization.

7. Method according to Claim 6, in which the synthetic elastomer latex is obtained by aqueous phase emulsification of a diene elastomer.

8. Method according to any one of the preceding claims, in which the synthetic elastomer latex is a latex of butadiene and styrene copolymer, preferably the synthetic elastomer latex is an SBR prepared in emulsion.

9. Method according to any one of the preceding claims, in which the amount of carbon-based filler during the bringing together of the two aqueous dispersions ranges from 2 phom to 150 phom, parts by weight per hundred parts of organic matter.

10. Method according to Claim 9, in which the carbon-based filler comprises carbon black, preferably the carbon-based filler consists of carbon black.

11. Method according to Claim 10, in which the amount of carbon-based filler during the bringing together of the two aqueous dispersions ranges from 30 phom to 110 phom, preferably the amount of carbon-based filler during the bringing together of the two aqueous dispersions ranges from 40 phom to 100 phom.

12. Masterbatch of synthetic diene elastomer and of carbon-based filler, obtained according to any one of Claims 1 to 11.

13. Elastomer composition based on at least one masterbatch according to Claim 12.

14. Finished or semi-finished article comprising a composition according to Claim 13.

15. Tyre tread comprising a composition according to Claim 13.

16. Tyre or semi-finished product comprising at least one rubber composition according to Claim 13.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9736724 A
- FR 2740778
- US 6013718 A
- WO 2008141702 A
- FR 2765882
- US 5977238 A
- WO 0192402 A
- US 6815473 B
- WO 2004096865 A
- US 20060089445 A
- EP 1127909 A
- US 6503973 B
- WO 2009000750 A
- WO 2009000752 A
- WO 0210269 A
- WO 9619511 A

**Littérature non-brevet citée dans la description**

- Zeta Potential an Introduction in 30 Minutes. *note technique de la série Zêtasizer Nano,* Septembre 2010, 3
- **C. W. CARR ; M. KOLTHOFF ; E. J. MEEHAN.** Journal of Polymer Science. University of Minesota, Minneapolis, Minesota, 1950, vol. V, 201-206
- *JOURNAL OF POLYMER SCIENCE,* 1951, vol. VI (1), 73-81
- **E. J. VANDENBERG ; G. E. HULSE.** Industrial and Engineering Chemistry. Hercules Powder Company, 1948, vol. 40, 932-937
- **J. R. MILLER ; H. E. DIEM.** Industrial and Engineering Chemistry. B. F. Goodrich Chemical Co, 1954, vol. 46, 1065-1073
- **MARTÍNEZ-PEDRERO, F. ; ALOUSQUE, F. ; DE GAUDEMARIS ; B., BERRIOT ; J., GABORIAUD ; F., BREMOND ; N., BIBETTE.** *J. paru dans Soft Matter,* 2012, vol. VIII (33), 8752-8757